# EUROPÄISCHE PATENTSCHRIFT

(11) **EP 0 500 198 B1**
(45) Veröffentlichungstag und Bekanntmachung des Hinweises auf die Patenterteilung: **22.03.1995**
(21) Anmeldenummer: 92250014.5
(22) Anmeldetag: 16.01.1992
(51) Int. Cl.: C05F 17/02, B65D 90/66

(54) **Mobiler Rottebehälter**
Mobile compost container
Récipient de compost mobile

(30) Priorität: 22.02.1991 DE 4106041
(43) Veröffentlichungstag der Anmeldung: 26.08.1992
(73) Patentinhaber: METALLGESELLSCHAFT Aktiengesellschaft, 60015 Frankfurt (DE)
(72) Erfinder: Strobach, Karl, W-4100 Duisburg 29 (DE); Sandler, Peter, W-4000 Düsseldorf (DE)
(74) Vertreter: Meissner, Peter E., Dipl.-Ing.

(56) Entgegenhaltungen:
- EP-A- 0 291 831
- DE-C- 4 005 535
- US-A- 4 518 095

## Beschreibung

Die Erfindung betrifft einen mobilen Rottebehälter in geschlossener Containerform (Quaderform) gemäß dem Oberbegriff des Patentanspruchs 1.

Ein solcher Rottebehälter ist aus der nicht vorveröffentlichte und auf dieselbe Anmelderin zurückgehenden DE-P 40 05 535.3 entnehmbar, der die EP-A-444 333 entspricht, die damit einen Stand der Technik nach Artikel 54(3) EPU darstellt. Dort ist die am Dach des Rottebehälters angeordnete Beladeluke an ein Rahmenwerk über Drehgelenke angehängt. Das Rahmenwerk seinerseits ist in drei Drehgelenken im Bereich einer oberen Längskante des Rottebehälters ausschwenkbar gelagert. Zur Öffnung und zum Offenhalten der Beladeluke ist das Rahmenwerk am mittleren der drei Drehgelenke in Form eines zweiarmigen Hebels nach außen verlängert. An diesen sich nach außen erstreckenden Hebelarm kann eine vorzugsweise als Gewindespindel ausgebildete Hubvorrichtung angreifen, die durch Verkürzung ihrer axialen Länge eine entsprechende Schwenkbewegung des Rahmenwerkes und der daran angehängten Beladeluke bewirkt. Beim Schließen wird die axiale Länge der Hubvorrichtung in umgekehrter Weise verändert. Diese Lösung ist konstruktiv einfach und gewährleistet in der offenen Stellung ein sicheres Offenstehen der Beladeluke.

Um in der geschlossenen Stellung der Beladeluke, d.h. während der Durchführung des Rottevorgangs einen sicheren gasdichten Verschluß der Beladeluke zu gewährleisten, sieht dieser Rottebehälter eine spezielle Spannvorrichtung vor, die wie folgt arbeitet. Das Rahmenwerk, das die Beladeluke hält, ist an der den Drehgelenken gegenüberliegenden Seite nach außen über die Seitenwand des Rottebehälters verlängert und mit einem Spannkopf versehen. In diesen Spannkopf kann das Widerlager einer zweiten, außen am Rottebehälter gelagerten Gewindespindel eingeschwenkt werden, so daß eine formschlüssige Verbindung zwischen Gewindespindel und Rahmenwerk hergestellt wird. Durch Verkürzung der wirksamen Länge der Gewindespindel infolge entsprechender Drehung kann der Spannkopf und somit das gesamte Rahmenwerk nach unten gedrückt werden. Infolgedessen wird die Beladeluke über die Gelenkverbindungen mit dem Rahmenwerk auf die vorgesehenen (mit flexiblen Dichtungen bestückten) Anlageflächen im Dach des Rottebehälters gepreßt. Um einen möglichst gleichmäßigen Anpreßdruck zu erzeugen, sind die Gelenkverbindungen zwischen Rahmenwerk und Beladeluke gleichmäßig entlang der Längsachse der Beladeluke verteilt.

Diese Konstruktion gewährleistet einen sicheren Dichtsitz, erfordert aber eine relativ massive, d.h. steife Gestaltung der Beladeluke, da der Anpreßdruck von der Mitte her in die Beladeluke eingeleitet wird. Im Hinblick auf ein möglichst geringes Gewicht der Rottebehälter und niedrige Herstellkosten ist dies jedoch verbesserungsfähig. Außerdem ist ein Nachteil in der Tatsache zu sehen, daß die Hubvorrichtung körperlich und örtlich völlig getrennt von der Spannvorrichtung ist, so daß ein entsprechend höherer Zeitaufwand zur Betätigung beider Vorrichtungen erforderlich ist. Hinzu kommt, daß nicht nur an einer sondern an zwei Seitenwänden des Rottebehälters nach außen vorstehende Bauteile angeordnet sind.

Aufgabe der Erfindung ist es daher, einen Rottebehälter gemäß DE-P 40 05 535.3 so zu verbessern, daß die genannten Nachteile weitestgehend beseitigt werden.

Gelöst wird diese Aufgabe mit den Merkmalen des Patentanspruchs 1. Vorteilhafte Weiterbildungen der Erfindung ergeben sich aus den Unteransprüchen 2 bis 9.

Durch die erfindungsgemäß vorgenommene körperliche Vereinigung der Funktionen "Öffnen und Offenhalten der Beladeluke" sowie "Andrücken und Verriegeln der Beladeluke" in einer einzigen Betätigungsvorrichtung kann die Bedienung des Rottebehälters in deutlicher Weise vereinfacht und der erforderliche Zeitbedarf verkürzt werden. Die Integration beider Funktionen wurde dadurch möglich, daß im Bereich der Schließstellung der Beladeluke in die Betätigung der Hubvorrichtung eine Leerlaufphase eingebaut wurde, durch die die Betätigung zeitweilig allein für den Antrieb des Verriegelungsmechanismus der Beladeluke zur Verfügung steht. In entsprechender Weise steht umgekehrt die Betätigung während des Ausschwenkens der Beladeluke nicht in Wirkverbindung mit dem Verriegelungsmechanismus.

Anhand des in den Figuren 1 bis 4 dargestellten Ausführungsbeispiels wird die Erfindung nachfolgend näher erläutert. Es zeigen:
- Figur 1: eine Draufsicht (A) auf einen erfindungsgemäßen Rottebehälter,
- Figur 2: die Seitenansicht (C) gemäß Figur 1,
- Figur 3: einen Schnitt gemäß Linie B-B in Figur 2 und
- Figur 4: einen Schnitt gemäß Linie D-D in Figur 3.

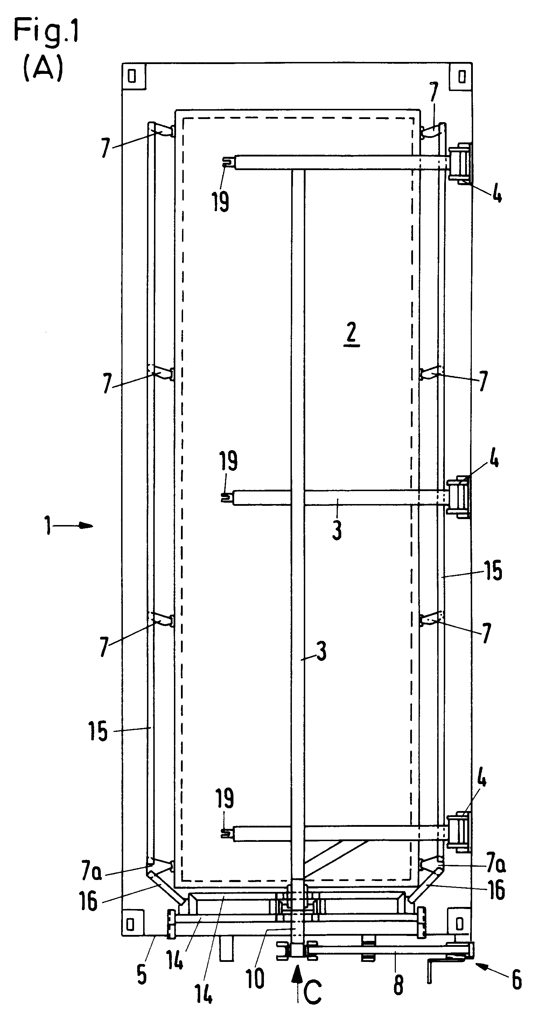

In Fig. 1 ist die Draufsicht auf das Dach eines erfindungsgemäßen mobilen Rottebehälters 1 dargestellt. Die rechteckige Beladeluke 2, die auch in mehrere kleinere Einzelluken unterteilt sein könnte, ist durch drei Gelenke 19 an ein Rahmenwerk 3 angehängt. Dieses z.B. aus Rohrprofilen mit Kastenquerschnitt gebildete Rahmenwerk 3 seinerseits ist durch drei Drehgelenke 4 im Bereich einer oberen Längskante des Rottebehälters 1 an der Außenseite der Dachfläche des Rottebehälters 1 befestigt. Im Bereich der Mittelachse der Beladeluke 2 ist ein Längsträger des Rahmenwerkes 3 über die Stirnseite 5 des Rottebehälters 1 hinaus nach außen geführt. Am Ende des Längsträgers greift eine Hubvorrichtung 6 zum Aufschwenken der Beladeluke 2 an.

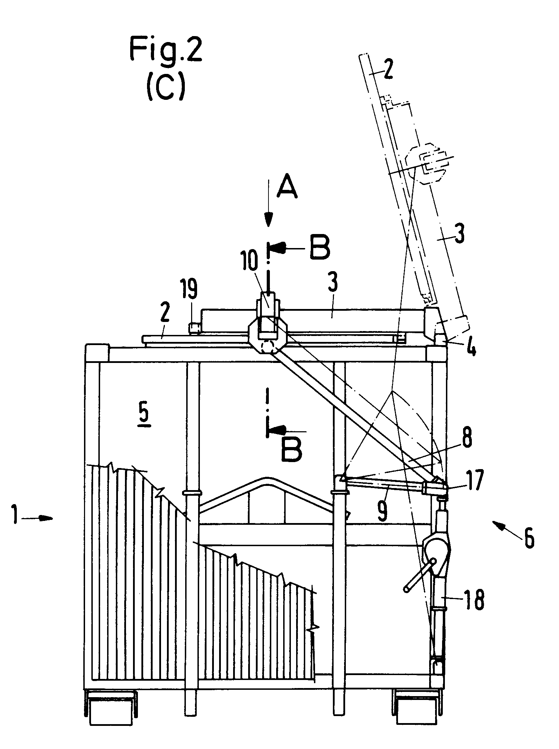

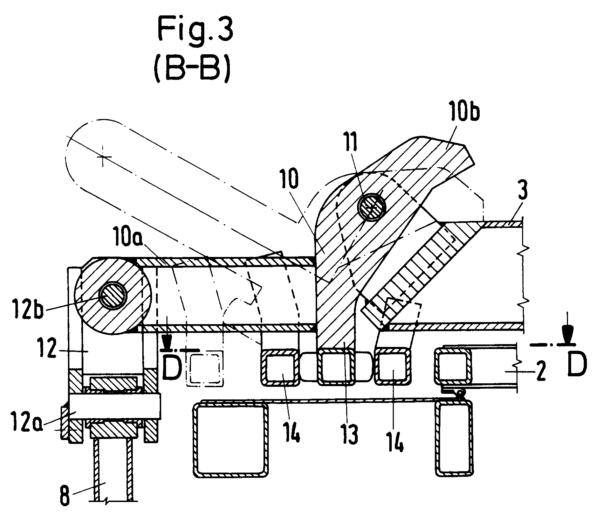

Die Funktion der Hubvorrichtung 6, die aus der Darstellung in Fig. 2 besser erkennbar ist, weist eine Antriebskurbel 9 und eine über das Drehgelenk 17 an einem Ende damit verbundene Koppel 8 auf. Das andere Ende der Koppel 8 ist über ein Koppelglied 10 an das Endstück des Längsträgers des Rahmenwerkes 3 angeschlossen. Die Ankopplung an den Längsträger ist aus dem in Fig. 3 dargestellten Schnittbild entnehmbar. Am Ende des Längsträgers ist das als doppelarmiger Hebel ausgebildete Koppelglied 10 in einer Gabel drehbar angelenkt. Die Drehachse 11 dieser Anlenkung liegt parallel zur Ebene des Rahmenwerkes 3. An dem nach außen weisenden ersten Hebelarm 10a des Koppelgliedes 10 greift die Koppel 8 der Hubvorrichtung 6 an. Hierzu wurde keine direkte Befestigung gewählt, sondern eine indirekte Ankopplung mittels eines kardanischen Gelenkes 12, dessen Gelenkachsen mit 12a und 12b bezeichnet sind.

Der zweite Hebelarm des Koppelgliedes 10 ist als Anschlagnocken 10b ausgebildet. Beim Hochfahren der Koppel 8 der Hubvorrichtung 6 dreht sich das Koppelglied 10 zunächst lediglich um die Achse 11, ohne daß sich das Rahmenwerk 3 bewegt. Erst nach Erreichen eines Mindestdrehwinkels (bis dahin liegt antriebstechnisch eine Leerlaufphase vor), der durch die strichpunktierte Lage des Koppelgliedes 10 angedeutet ist, kommt der Anschlagnocken 10b zur Anlage an eine entsprechende Anschlagfläche am Rahmenwerk 3, so daß erst jetzt eine formschlüssige Antriebsverbindung zwischen Hubvorrichtung 6 und Rahmenwerk 3 besteht. Bei weiterer Betätigung der Hubvorrichtung 6 wird daher das Rahmenwerk 3 und somit zwangsläufig auch die Beladeluke 2 um die Drehgelenke 4 nach außen geschwenkt in die Offenstellung.

In der Leerlaufphase betätigt das Koppelglied 10 einen Verriegelungsmechanismus für die Beladeluke 2. Hierzu ist sein erster Hebelarm 10a an der Unterseite mit einem Betätigungsnocken 13 ausgestattet, der bei abgesenkter Beladeluke 2 in ein Betätigungsgestänge 14 eingreift und bei sich öffnender Beladeluke 2 außer Eingriff gelangt. Zur Gewährleistung einer problemlosen "Einfädelung" des Betätigungsnockens 13 ist das Betätigungsgestänge 14 mit sich nach oben konisch erweiternden Gleitführungen ausgestattet und der Betätigungsnocken 13 mit gerundeten Gleitflächen versehen.

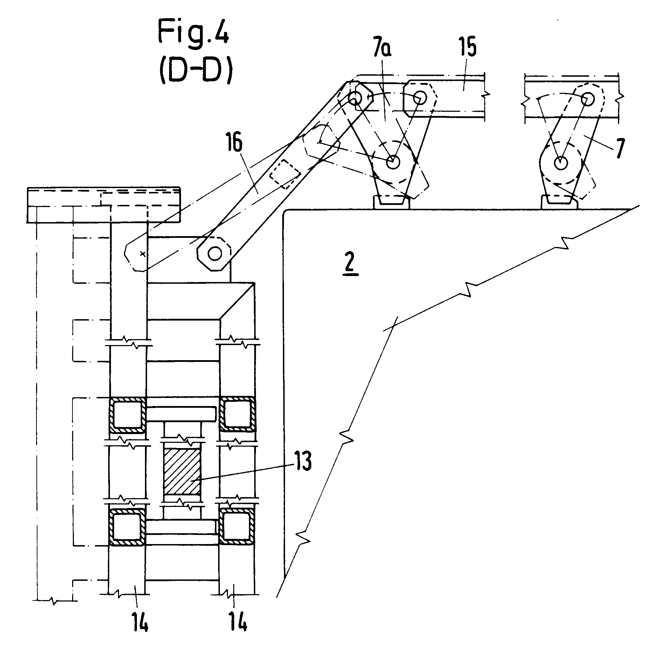

Die Funktionsweise des Verriegelungsmechanismus geht aus den Darstellungen der Figur 1 und 4 hervor. An den beiden Längsseiten der Beladeluke 2 entlang sind auf der Außenseite der Dachfläche des Rottebehälters 1 in gleichmäßigem Abstand drehbare Schließnocken 7, 7a angebracht. Durch Drehung um einen relativ kleinen Winkel (z.B.40-45°) gelangen diese Schließnocken 7, 7a gleitend in Eingriff mit entsprechenden Haltenasen an der Beladeluke 2.

Die Gleitflächen der Schließnocken 7, 7a und/oder der Haltenasen sind in der Weise schräg geneigt, daß mit zunehmender Drehung eine geringe Abwärtsbewegung der Beladeluke 2 zur Erzeugung einer Anpreßkraft und zum Erreichen eines dichten Sitzes auf den Anlageflächen der Beladeluke 2 erreicht wird. Zweckmäßigerweise werden die Anlageflächen auf einer Seite mit einer elastischen Dichtung versehen. Die Drehung der Schließnocken 7, 7a beim Ver- und Entriegeln der Beladeluke 2 wird jeweils durch eine an jeder Längsseite angeordnete Schließstange 15 bewirkt. Die Schließstange 15 ist jeweils drehbar an einer Seite der im vorliegenden Beispiel jeweils als doppelarmige Hebel ausgebildeten Schließnocken 7, 7a angelenkt. Ein Ende jeder Schließstange 15 ist jeweils über eine Schubstange 16 mit dem Betätigungsgestänge 14 verbunden. Die Befestigungen der Schubstangen 16 sind jeweils als Drehgelenke ausgeführt. Das Betätigungsgestänge 14 ist in horizontalen Gleitführungen gelagert und wird im Bereich der "Leerlaufphase" des Koppelgliedes 10 bei dessen Drehung um die Achse 11 mittels des Betätigungsnockens 13 in horizontaler Richtung verschoben. Dies führt infolge der Kraftübertragung durch die Schubstangen 16 und die Schließstangen 15 zu einer Drehbewegung aller Schließnocken 7, 7a und dementsprechend (je nach Verschieberichtung) zu einer Ver- oder Entriegelung der Beladeluke 2.

Im gezeigten Ausführungsbeispiel ist die Schubstange 16 absichtlich in einem anderen Punkt an den Schließnocken 7a angelenkt worden als die Schließstange 15, weil dadurch bei gleichem Verschiebeweg des Betätigungsgestänges 14 ein größerer Drehwinkel der Schließnocken 7, 7a ermöglicht wird.

Um die Antriebskurbel 9 der Hubvorrichtung 6 um deren Drehachse an der Seitenwand 5 des Rottebehälters 1 drehen zu können, könnte beispielsweise ein entsprechender motorischer Drehantrieb vorgesehen werden. Einfacher, kostengünstiger und vor allem manuell, d.h. unabhängig von Fremdenergiezufuhr betreibbar ist jedoch der Gewindespindelantrieb 18 (oder alternativ Zahnstangenantrieb) in der Art eines Wagenhebers, wie er in Fig. 2 dargestellt ist. Dieser Gewindespindelantrieb 18 besitzt einerseits ein Schwenklager im unteren Bereich der Seitenwand 5 und andererseits eine Anlenkung an die Antriebskurbel 9, zweckmäßigerweise im Gelenk 17. Die Handkurbel des Gewindespindelantriebs 18 ist abnehmbar ausgeführt und kann zur Erzielung einer besonders schnellen und anstrengungsarmen Betätigung auch durch einen z .B. pneumatisch oder elektrisch angetriebenen Handschrauber ersetzt werden. Eine andere Alternative zur Betätigung der Hubvorrichtung 6 besteht darin, daß der Gewindespindelantrieb 18 durch ein hydraulisches oder pneumatischen Kolben/Zylinder-System ersetzt wird.

In der in Fig. 2 dargestellten Sicht stellt das Rahmenwerk 3 mit der Antriebskurbel 9 und der Koppel 8 sowie der Seitenwand 5 in kinematischer Hinsicht eine Viergelenkkette in Form einer Kurbelschwinge dar. Die Seitenwand 5 ist das feststehende Glied, 9 ist die (umlauffähige) Antriebskurbel, 8 die Koppel und 3 das hin- und herschwingende Glied der Viergelenkkette.

Eine weitere Abwandlung der Erfindung besteht darin, anstelle der Antriebskurbel 9 und der Koppel 8 lediglich ein längenveränderliches (biegesteifes) Antriebsglied in Form einer Gewindespindel oder eines hydraulischen oder pneumatischen Zylinder/Kolben-Systems vorzusehen.

Dabei ergäbe sich jedoch der Nachteil längerer Verfahrwege des Antriebsgliedes zwischen der Offen- und der Schließstellung der Beladeluke 2. Eine Viergelenkkette gemäß Fig. 2 beinhaltet dagegen eine Übersetzung, durch die bei vergleichsweise kleinen Verfahrwegen des Antriebselementes relativ große Schwenkbewegungen der Beladeluke ausgelöst werden.

Neben einer extrem einfachen und schnellen Bedienbarkeit des Mechanismus zum Ver- und Entriegeln sowie zum Auf- und Zufahren der Beladeluke 2 (Betätigung von einer einzigen Stelle aus) bringt die erfindungsgemäße Ausführung insbesondere auch den Vorteil einer leichteren Bauweise der Beladeluke 2 mit sich, da diese wegen des vom Lukenrand aus erfolgenden Andrückens in der Verriegelungsstellung nicht besonders verwindungs- und biegesteif sein muß.

## Patentansprüche

1. Mobiler Rottebehälter (1) in geschlossener Containerform (Quaderform) mit mindestens einer Beladeluke (2) im Dach des Rottebehälters (1), wobei die Beladeluke (2) an ein Rahmenwerk (3) angehängt ist, welches in Drehgelenken (4) schwenkbar am Rottebehälter (1) gelagert ist, ferner mit einer außen an einer Seitenwand (5) des Rottebehälters (1) drehbar gelagerten und auf die Beladeluke (2) wirkenden Schwenkvorrichtung zum Öffnen und Offenhalten der Beladeluke (2) und mit einer Spannvorrichtung zum dichten Zuhalten der Beladeluke (2) in der geschlossenen Stellung, wobei
die Schwenkvorrichtung und die Betätigung der Spannvorrichtung körperlich vereint in einer Hubvorrichtung (6) ausgeführt sind, die Hubvorrichtung (6) im Bereich der Schließstellung der Beladeluke (2) im Hinblick auf die Schließbewegung der Ladeluke (2) eine Leerlaufphase aufweist und in dieser Leerlaufphase von der Hubvorrichtung (6) ein Verriegelungsmechanismus betätigbar ist, der auf jeweils mindestens zwei an jeder Längsseite des Rottebehälters (1) angeordnete Schließnocken (7, 7a) wirkt, mit denen die Beladeluke (2) zur dichten Anlage an die entsprechenden Anlageflächen im Dach des Rottebehälters (1) bringbar sind.

2. Rottebehälter nach Anspruch 1,
dadurch gekennzeichnet,
daß die Hubvorrichtung (6) mit einem Hubgestänge (8, 9) ausgebildet ist, das über ein Koppelglied (10) an das Rahmenwerk (3) der Beladeluke (2) angreift, daß das Koppelglied (10) die Form eines zweiarmigen Hebels (10a, 10b) aufweist, der um eine zur Ebene des Rahmenwerkes (3) parallele Achse (11) drehbar am Rahmenwerk (3) gelagert ist, daß der erste Hebelarm (10a) des Koppelgliedes (10) biegekraftfrei, insbesondere kardanisch mit dem Hubgestänge (8, 9) verbunden ist, daß der zweite Hebelarm des Koppelgliedes (10) als Anschlagnocken (10b) ausgebildet ist,
daß der erste Hebelarm (10a) mit einem Betätigungsnocken (13) versehen ist, der in geschlossener und nahezu geschlossener Stellung der Beladeluke (2) formschlüssig in ein verschiebbar am Rottebehälter (1) gelagertes Betätigungsgestänge (14) des Verriegelungsmechanismusses eingreift und
daß das Betätigungsgestänge (14) in Wirkverbindung mit zwei jeweils an den Längsseiten am Dach des Rottebehälters (1) gelagerten Schließstangen (15) steht, mit denen die ihnen zugeordneten jeweils mindestens zwei Schließnocken (7, 7a) betätigbar sind.

3. Rottebehälter nach Anspruch 2,
dadurch gekennzeichnet,
daß das Hubgestänge (6) in Form eines manuell oder motorisch betätigbaren Spindeltriebs ausgebildet ist.

4. Rottebehälter nach Anspruch 2,
dadurch gekennzeichnet,
daß das Hubgestänge (6) als hydraulisches oder pneumatisches Kolben/Zylinder-System ausgebildet ist.

5. Rottebehälter nach Anspruch 2,
dadurch gekennzeichnet,
daß das Hubgestänge (6), im Querschnitt des Rottebehälters (1) gesehen, mit dem Rahmenwerk (3) und der Seitenwand (5), an der das Hubgestänge (6) gelagert ist, in kinematischer Hinsicht eine Viergelenkkette in Form einer Kurbelschwinge bildet, wobei die Seitenwand (5) den feststehenden Steg und das Rahmenwerk (3) das hin- und herschwingende Kurbelglied bildet.

6. Rottebehälter nach Anspruch 5,
dadurch gekennzeichnet,
daß das kleinste Glied der Kurbelschwinge als Antriebskurbel (9) ausgebildet ist.

7. Rottebehälter nach Anspruch 6,
dadurch gekennzeichnet,
daß die Antriebskurbel (9) mittels eines angelenkten manuell oder motorisch betätigbaren Spindeltriebs (16) drehbar ist.

8. Rottebehälter nach Anspruch 6,
dadurch gekennzeichnet,
daß die Antriebskurbel (9) mittels eines angelenkten hydraulischen oder pneumatischen Kolben/Zylinder-Systems drehbar ist.

9. Rottebehälter nach Anspruch 7 oder 8,
dadurch gekennzeichnet,
daß die Anlenkung im Bereich des Drehgelenks (17) von Antriebskurbel (9) und Koppel (8) der Kurbelschwinge angeordnet ist.

## Claims

1. Mobile group container (1) as a closed container (block-shaped) with at least one loading hatch (2) in a top section of a group container (1) concerned, whereby a said loading hatch (2) is hung on a frame structure (3) which is supported, such that it can swivel, in a swivelling link, and with an external swivelling device, supported such that it can rotate on a lateral wall (5) of a said group container (1), which acts on a loading hatch (2) to open it and hold it open, and with a tensioning device to keep a loading hatch (2) tightly shut in a closed position, whereby
a swivelling device and operation of a tensioning device are bodily combined in a lifting device (6), a said lifting device (6) shows an unloaded phase, in an area of a closure position of a loading hatch (2), in terms of a closure movement of a said loading hatch (2), and in an unloaded phase concerned, of a lifting device (6), a locking device can be operated which acts in each case on at least two locking cams (7, 7a), disposed on each lengthening side of a said group container (1), with which (a) loading hatch(es) (2) for tight abutment on corresponding contact surfaces in a top concerned of a group container (1) can be applied.

2. Group container in accordance with claim 1,
wherein
a lifting device (6) is developed with a lifting bar (8, 9), which engages on a frame structure (3) of a loading hatch (2) by means of a coupling member (10) has a form of a two-armed lever (10a, 10b) which is supported on a frame structure (3) such that it can rotate about an axis parallel to a plane of a said frame structure (3), and a first lever arm (10a) of a coupling member (10) is connected to a lifting bar (8, 9) without bending forces, on gimbals in particular, and a second lever-arm of a coupling member (10) is developed as a lug cam (10b), and a first lever arm (10a) is provided with an operating cam (13) which form-lockingly engages in an operating bar (14) of a locking mechanism, which is supported on a group container (1) such that it can slide, in a closed and nearly closed position of a loading hatch (2) and a said operating bar (14) is always effectively connected to two locking bars (15) supported on each of lengthwise top sides of a group container concerned (1), it being possible for at least two locking cams (7, 7a) associated with each locking bar (15) to be operated by said locking bars.

3. Group container in accordance with claim 2,
wherein
a lifting bar (6) is developed as a hand- or motor-operated spindle drive.

4. Group container in accordance with claim 2,
wherein
a lifting bar (6) is developed as a hydraulic or pneumatic piston-cylinder system.

5. Group container in accordance with claim 2,
wherein
a lifting bar (6), seen in a cross-section through a group container (1) concerned, forms, with a frame structure (3) and a lateral wall (5), on which a lifting bar (6) is supported, in terms of kinematics, a four-link train in a form of a sliding block, whereby a side wall (5) of a stationary web and a frame structure (3) forms a forward and backward swinging, sliding member.

6. Group container in accordance with claim 5,
wherein
a smallest member of a sliding block is developed as an operating crank (9).

7. Group container in accordance with claim 6,
wherein
an operating crank (9) can rotate by means of a linked hand- or motor-operated spindle-drive (16).

8. Group container in accordance with claim 6,
wherein
an operating crank (9) can rotate by means of a linked hydraulic or pneumatic piston-cylinder system.

9. Group container in accordance with either claim 7 or 8,
wherein linking is disposed in an area of a turning link (17) of an operating crank (9) and coupling (8) of a sliding block.

## Revendications

1. Récipient mobile à compost (1) réalisé sous la forme d'un conteneur fermé (forme parallélépipédique) comportant au moins une ouverture de chargement (2) aménagée dans le toit du récipient à compost (1), l'ouverture de chargement (2) étant suspendue à un cadre (3), qui est monté dans des articulations pivotantes (4) de manière à pouvoir basculer sur le récipient à compost (1), et comportant en outre un dispositif de basculement, qui est monté pivotant à l'extérieur sur une paroi latérale (5) du récipient à compost et agit sur l'ouverture de chargement (2) pour ouvrir et maintenir ouverte cette ouverture de chargement (2), et un dispositif de blocage destiné à maintenir d'une manière étanche l'ouverture de chargement (2) dans la position fermée, le dispositif de basculement et le dispositif d'actionnement du dispositif de blocage étant agencés en étant combinés structurellement en un dispositif de levage (6), le dispositif de levage (6) ayant, au voisinage de la position de fermeture de l'ouverture de chargement (2) une phase de marche à vide, en rapport avec le mouvement de fermeture de l'ouverture de chargement (2), et, pendant cette phase de marche à vide, le dispositif de levage (6) pouvant actionner un mécanisme de verrouillage, qui agit sur au moins deux cames de fermeture (7,7a), qui sont prévues sur les deux côtés longitudinaux du récipient à compost (1) et à l'aide desquelles l'ouverture de chargement (2) peut être appliquée d'une manière étanche contre les surfaces d'application correspondantes ménagées dans le toit du récipient à compost (1).

2. Récipient à compost suivant la revendication 1, caractérisé par le fait que
le dispositif de levage (6) est réalisé sous la forme d'une tringlerie de levage (8,9), qui attaque le cadre (3) de l'ouverture de chargement (2) par l'intermédiaire d'un organe d'accouplement (10),
que l'organe d'accouplement (10) a la forme d'un levier à deux bras (10a, 10b), qui est monté sur le cadre (3) de manière à pouvoir tourner autour d'un axe (11) parallèle au plan du cadre (3),
que le premier bras de lever (10a) de l'organe d'accouplement (10) est relié, en l'absence de toute force de flexion et notamment selon un montage à la cardan, à la tringlerie de levage (8,9),
que le second bras de lever de l'organe d'accouplement (10) est agencé sous la forme de cames de butée (10b),
que le premier bras de lever (10a) est pourvu d'une came d'actionnement (13), qui, lorsque l'ouverture de chargement (2) est dans la position fermée ou presque fermée, s'engage selon une liaison par formes complémentaires dans une tringlerie d'actionnement (14) du mécanisme de verrouillage, qui est montée coulissante sur le récipient à compost (1), et
que la tringlerie d'actionnement (14) coopère avec deux barres de fermeture (15) qui sont montées respectivement sur les grands côtés du toit du récipient à compost (1) et à l'aide desquelles peuvent être actionnées respectivement les au moins deux cames de fermeture (7,7a) qui leur sont associées.

3. Récipient à compost suivant la revendication 2, caractérisé par le fait que la tringlerie de levage (6) est réalisée sous la forme d'un dispositif d'entraînement à broche pouvant être actionné manuellement ou par un moteur.

4. Récipient à compost suivant la revendication 2, caractérisé par le fait que la tringlerie de levage (6) est réalisée sous la forme d'un système à piston/cylindre hydraulique ou pneumatique.

5. Récipient à compost suivant la revendication 2, caractérisé par le fait que, en suivant la coupe transversale du récipient à compost (1), la tringlerie de levage (6) forme du point de vue cinématique, avec le cadre (3) et la paroi latérale (5) sur laquelle est montée la tringlerie de levage (6), un quadrilatère articulé se présentant sous la forme d'un mécanisme à manivelle et bielle oscillante, la paroi latérale (5) constituant la barre fixe, et le cadre (3) constituant l'élément de manivelle qui oscille en va-et-vient.

6. Récipient à compost suivant la revendication 5, caractérisé par le fait que le plus petit organe du système à manivelle et belle oscillante est agencé sous la forme d'une manivelle d'entraînement (9).

7. Récipient à compost suivant la revendication 6, caractérisé par le fait que la manivelle d'entraînement (9) peut être entraînée en rotation au moyen d'un dispositif articulé d'entraînement à broche (16) pouvant être actionné manuellement ou à l'aide d'un moteur.

8. Récipient à compost suivant la revendication 6, caractérisé par le fait que la manivelle d'entraînement (9) peut être entraînée en rotation au moyen d'un système articulé à piston/vérin hydraulique ou pneumatique.

9. Récipient à compost suivant la revendication 7 ou 8, caractérisé par le fait que la liaison articulée est disposée au voisinage de l'articulation (17) de la manivelle d'entraînement (9) et de la bielle (8) de l'ensemble à manivelle et bielle oscillante.
